# EUROPEAN PATENT APPLICATION

(11) **EP 1 944 554 A2**
(43) Date of publication of application: **16.07.2008**
(21) Application number: 07121722.8
(22) Date of filing: 28.11.2007
(51) Int. Cl.: F24D 3/10, F24H 9/02, F24H 9/14

(54) **Unit and method for distributing fluids**

(30) Priority: 09.01.2007 IT TO20070012
(71) Applicant: Ferrero, Riccardo, 12060 Farigliano (CN) (IT)
(72) Inventor: Ferrero, Riccardo, 12060 Farigliano (CN) (IT)
(74) Representative: Robba, Pierpaolo

(57) **Abstract**

The unit (1) for distributing fluids according to the invention includes: a) a sanitary generator (3), and b) an intermediate distribution system (5). The sanitary generator (3) heats sanitary hot water through a heat exchanger (300) and distributes primary hot water, heated by a central boiler, to the intermediate distribution system (5), which distributes such water, through the manifolds (504, 506), to a plurality of radiators. The fluidic circuits of the sanitary generator (3, 3') and of the intermediate distribution system (5, 5') are arranged to be mutually and reversibly connected through mechanical couplings, in order to form a modular structure. The ducts, the ports and the fittings of the circuits are arranged on three different levels, in order to reduce the overall size of the unit (1). Also the arrangement and the configuration of the elements assist in reducing the overall size of the unit and in creating a modular structure that can be assembled in different manners.

## Description

### Field of the invention

The present invention relates to a unit for distributing fluids, to be used especially in constructing systems for heating, cooling and sanitary hot water production. The invention also relates to a method of distributing fluids, especially for heating and cooling buildings and for producing sanitary hot water.

### State of the art

Several aspects are considered when choosing and designing a heating system, or more generally, an air conditioning system.

A first kind of considerations concerns energy saving when the system is being used. In respect of such an aspect, as a general rule a centralised heating system is very often more economical than a plurality of individual heating systems, where each system independently heats a single flat by means of a small boiler installed on a wall of the same flat. One reason for the success of such small boilers is that the user manages heating according to his/her free choice and pays only what he/she consumes, so that he/she is induced to limit consumption to the maximum extent.

With centralised heating, cost sharing, usually based on the utilised surface, is made impersonal and therefore it does not stimulate savings. However, a centralised system allows a better efficiency in burner and boiler management, especially when the heat of the water of the centralised boiler can be exploited to produce sanitary hot water.

A second kind of considerations concerns home comfort. Usually, it is deemed that, for a same average temperature of the heated room, systems with radiating panels installed in the floor or in the walls offer a more comfortable temperature distribution than systems employing radiators or fan-convectors. Yet, systems with floor or wall radiating panels generally exhibit a greater thermal inertia and longer response transients.

What stated above indicates that it would be desirable to have available heating, or more generally air conditioning systems, combining the advantages of the different kinds of systems discussed above. In order to obtain systems having the advantages of both the systems employing floor or wall radiating panels, and the systems employing radiators or fan-convectors, it is known to construct mixed systems where part of the heating elements (a particular kind of air conditioning terminals) are floor and/or wall radiating panels, and other heating elements are radiators and/or fan-convectors.

It is an object of the present invention to provide fluid distribution units for a relatively wide range of heating and, more generally, air conditioning systems, with relatively limited costs and in a manner that is convenient from the industrial viewpoint.

### Summary of the invention

Such object is achieved, according to a first aspect of the invention, by means of a fluid distribution unit having the features as claimed in claim 1.

According to a particular embodiment of the invention, such unit further includes a sanitary generator, in turn including:
b.1) a sanitary heater arranged to heat an expendable fluid;
b.2) a generator interface circuit, arranged to convey the conditioning fluid and/or the expendable fluid to the sanitary heater, and to evacuate the conditioning fluid and/or the expendable fluid from the sanitary heater,
wherein the fluidic circuits of the sanitary heater and of the intermediate distribution system are arranged to be reversibly connected together through mechanical couplings.

According to a particular embodiment of the invention, the first manifold return duct follows a path chosen out of the following group: substantially arc-shaped, substantially curved, substantially L-shaped, substantially J-shaped.

According to a particular embodiment of the invention, the first manifold supply duct and the first delivery manifold are substantially parallel to each other.

According to a particular embodiment of the invention, the first manifold supply duct and the first delivery manifold are so arranged that the conditioning fluid flows along the first delivery manifold in substantially opposite direction to its flow direction along the first manifold supply duct.

According to a particular embodiment of the invention, the first manifold return duct and the first return manifold are substantially parallel to each other.

According to a particular embodiment of the invention, the first manifold return duct and the first return manifold are so arranged that the conditioning fluid flows along the first return manifold in substantially opposite direction to its flow direction along the first manifold return duct.

According to a particular embodiment of the invention, the sanitary heater comprises a heat exchanger and a primary delivery duct arranged to evacuate from the heat exchanger the conditioning fluid that has passed through said exchanger, wherein the primary delivery duct is substantially parallel to and in line with one out of the first delivery manifold and the first return manifold.

According to a particular embodiment of the invention, the sanitary heater comprise a heat exchanger and a primary delivery duct arranged to evacuate from the heat exchanger the conditioning fluid that has passed through the exchanger, wherein the primary delivery duct joins the first manifold return duct near the end of the first return manifold opposite the end at which the first manifold return duct joins the same manifold.

According to a particular embodiment of the invention, the end distribution system comprises a pump arranged to increase the fluid pressure in the second delivery manifold.

According to a particular embodiment of the invention, the second delivery manifold and the second return manifold are substantially parallel to each other.

According to a particular embodiment of the invention, the second delivery manifold and/or the second return manifold are substantially parallel to the first delivery manifold and/or the first return manifold.

According to a particular embodiment of the invention, the second delivery manifold and the second return manifold lie at different levels, with reference to the depth of the whole of the circuits of the sanitary generator and the intermediate distribution system.

According to a particular embodiment of the invention, the first manifold supply duct extends from the sanitary generator towards the end of the intermediate distribution system remote from the sanitary generator, and the first delivery manifold joins the first manifold supply duct at the end thereof located on the side of the intermediate distribution system remote from the sanitary generator.

According to a particular embodiment of the invention, the first manifold return duct extends from the sanitary generator towards the end of the intermediate distribution system remote from the sanitary generator, and the first return manifold joins the first manifold return duct at the end thereof located on the side of the intermediate distribution system remote from the sanitary generator.

According to other aspects of the invention, said object is attained by means of a supply kit having the features as claimed in claim 19.

According to a particular embodiment of the kit as claimed in claim 19, one of the submodules further includes a manifold collection duct, which extends transversally to the manifold return duct and joins it in correspondence of one of the end fittings.

According to yet another aspect of the present invention, said object is attained by means of a method of distributing fluids having the features as claimed in claim 23.

According to a particular embodiment, such a method comprises the step of feeding the fluid distribution unit with an expendable fluid.

According to a particular embodiment of such a method, the conditioning fluid is chosen out of the following group: a fluid with a temperature above 50°C, a fluid with a temperature in the range 40°C to 100°C, wherein the fluid is possibly water.

According to a particular embodiment of such a method, the expendable fluid is chosen out of the following group: water, drinking water.

The advantages afforded by the present invention will become more apparent to the skilled in the art from the following detailed description of a particular and non limiting exemplary embodiment, given with reference to the following schematic Figures.

### List of the Figures

Fig. 1 is a front view of a first exemplary embodiment of a fluid distribution unit according to the present invention;
Figs. 1A and 1B show each a submodule of the intermediate distribution system of the unit shown in Fig. 1;
Fig. 2 is a perspective partial view of the sanitary generator of the unit shown in Fig. 1;
Fig. 3 is a front view of a second exemplary embodiment of a fluid distribution unit according to the present invention;
Fig. 4 is a front view of a third exemplary embodiment of a fluid distribution unit according to the present invention;
Fig. 5 is a front view of the housing box of the unit shown in Fig. 1;
Fig. 6 is a side view of the longitudinal fastening brackets of the box shown in Fig. 5;
Fig. 6A is a top view of a detail of a longitudinal fastening bracket and a longitudinal guide of the box shown in Fig. 5;
Fig, 7 is a front view of a fourth exemplary embodiment of a fluid distribution unit according to the present invention;
Figs. 8A, 8C, 8E are side views, taken from section plane B - B, of the sanitary generator of the fluid distribution unit shown in Fig. 7, in partially disassembled condition;
Figs. 8B, 8D, 8F, 8G are front views of the partially disassembled sanitary generator, as shown in Figs. 8A, 8C, 8E, respectively;
Fig. 8H is a side view, taken from section plane B - B, of the sanitary generator of the fluid distribution unit shown in Fig. 7, in assembled condition;
Fig. 8I is a side view, taken from section plane A - A, of the sanitary generator of the fluid distribution unit shown in Fig. 7, in assembled condition;
Fig. 9A is a front view of the manifold supply duct 500'" and the delivery manifold 504" of the intermediate distribution system 5'" of the fluid distribution unit shown in Fig. 7;
Fig. 9B is a side view of the assembly shown in Fig. 9A, taken from section plane C - C;
Fig. 10A is a front view of some components of the end distribution system 7" of the fluid distribution unit shown in Fig. 7;
Fig. 10B is a side view of the assembly shown in Fig. 10A, taken from section plane D-D.

### Detailed description

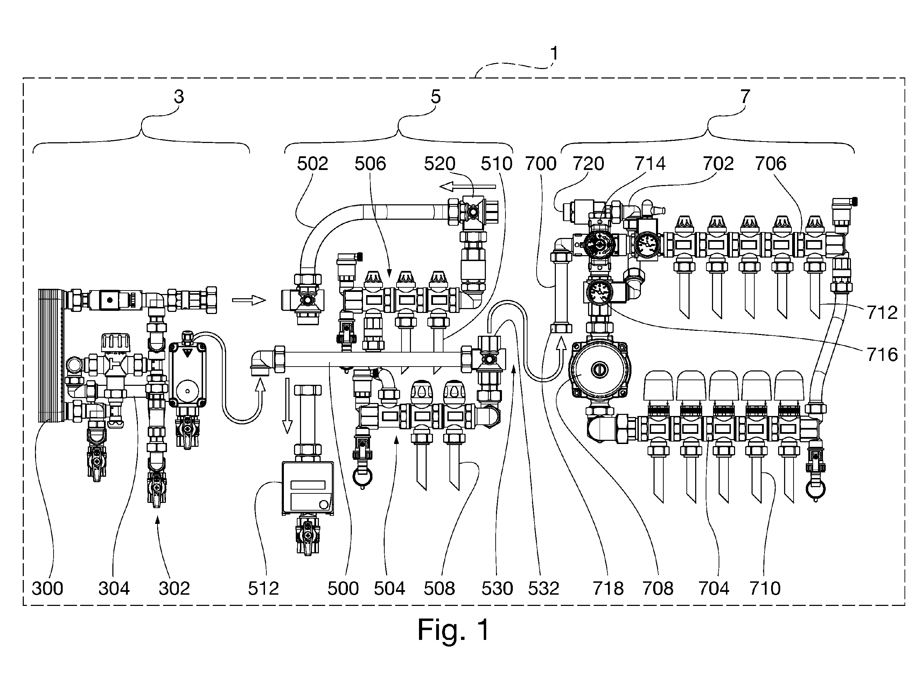

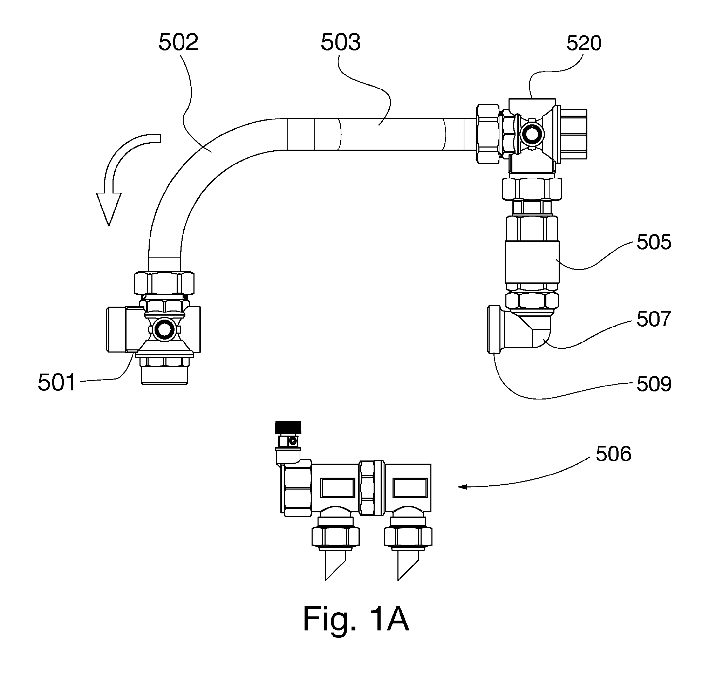

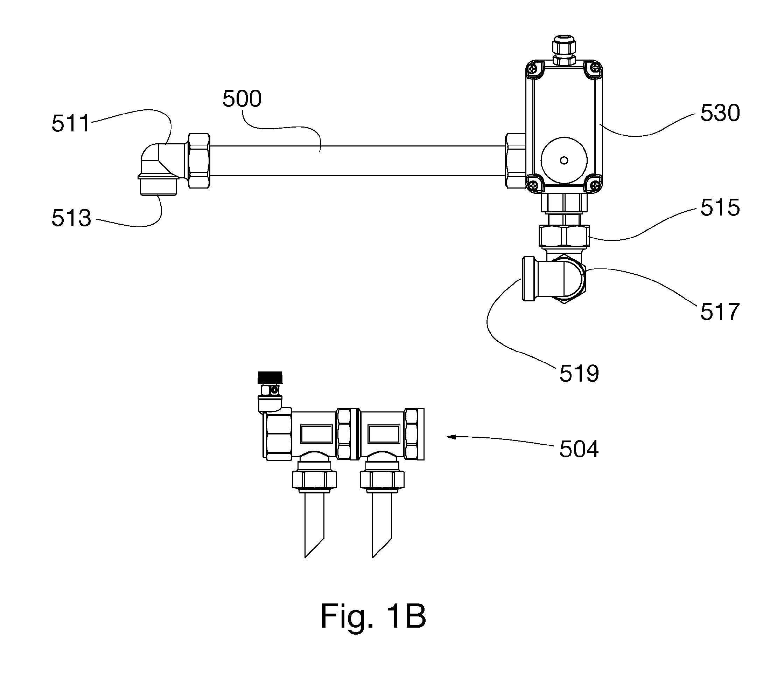

Fig. 1 schematically shows a first embodiment of a fluid distribution unit for a system for heating and possibly cooling buildings, according to the present invention.

Such a unit, generally denoted by reference numeral 1, can be considered as being formed of three subunits: a sanitary generator 3, an intermediate distribution system 5 and an end distribution system 7.

Sanitary generator 3 in turn comprises, in the present example, a heat exchanger 300, for instance a plate heat exchanger, and a generator interface circuit 302 connecting heat exchanger 300 with intermediate distribution system 5.

Intermediate distribution system 5 fluidically connects generator interface circuit 302 and end distribution system 7.

### The sanitary generator

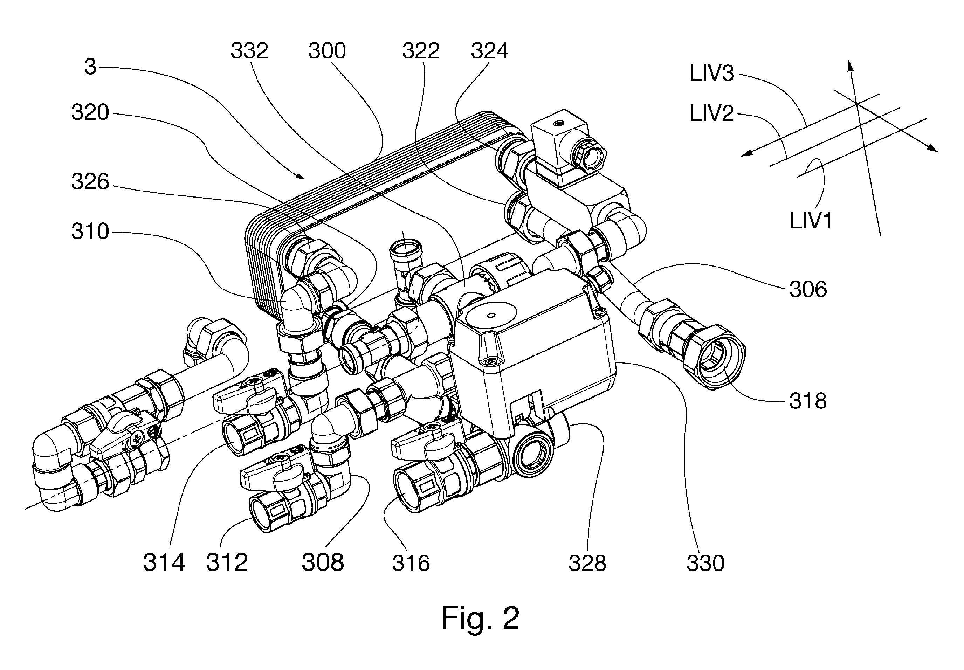

Generator interface circuit 302 (Figs. 1, 2) comprises primary inlet duct 304, primary delivery duct 306, sanitary inlet duct 308 and sanitary delivery duct 310. Sanitary inlet duct 308 and sanitary delivery duct 310 can be connected, through respective mouths 312, 314, to a circuit supplying an expendable fluid, e.g. a domestic circuit supplying sanitary water. Primary inlet duct 304 can be connected, through mouth 316, to a source of conditioning fluid (not shown), for instance to a branch of a remote heating system or to the delivery side of a boiler of a centralised heating system, both of which supply hot water for heating purposes.

Reference numeral 328 (Fig. 2) denotes a mouth through which generator interface circuit 302 can be directly connected to end distribution system 7, as it will be described in more detail further on. Reference numeral 330 denotes a three-way valve with rotary shutter, for instance of the kind described in co-pending Italian Patent Application No. TO2007A000013, in the name of the same Applicant, entitled "SISTEMA DI CONDIZIONAMENTO, UNITA' DI DISTRIBUZIONE E VALVOLA DI DISTRIBUZIONE PER TALE SISTEMA, E METODO PER IL CONDIZIONAMENTO TERMICO DI UN EDIFICIO TRAMITE TALE SISTEMA" (THERMAL CONDITIONING SYSTEM, DISTRIBUTION UNIT AND VALVE FOR SAID SYSTEM, AND METHOD FOR THE THERMAL CONDITIONING OF A BUILDING WITH SAID SYSTEM). Preferably valve 330, like valve 530 described below, are valves automatically operated by an actuator, such as for instance an electric motor, so that they can automatically manage the whole distribution unit 1.

Primary delivery duct 306 can be connected, through mouth 318, with intermediate distribution system 5. Reference numerals 320, 322, 324 and 326 denote the connections, or ports, of the inlet duct for the conditioning fluid and of primary delivery duct 306, sanitary inlet duct 308 and sanitary delivery duct 310, respectively, with the body of heat exchanger 300 or, in other embodiments, with the body of another kind of hot water generator. Mouths 312, 314, 316, 318 and 328, and ports 320, 322, 324 and 326 can comprise fittings with threaded couplings, quick couplings or other kinds of substantially reversible connections. Ports 320, 322, 324 and 326 can comprise welded connections or other kinds of substantially irreversible connections.

More generally, according to the present invention, the fluidic circuits of sanitary generator 3 and of intermediate distribution system 5 are arranged for reversible mutual connection through mechanical connections, such as for instance mouths 318, 328: this enables constructing modular units for distributing fluids by differently assembling multiple base modules, such as for instance sanitary generator 3 and intermediate distribution system 5.

The operation of sanitary generator 3 is as follows.

Primary hot water, coming for instance from the boiler of a hot water generator of a condominium, or generally a centralised hot water generator, arrives at sanitary generator 3 through primary inlet mouth 316 and, depending on the condition of selector valve 330, it is forwarded to either heat exchanger 300 only or intermediate distribution system 5 only, or both.

Primary hot water forwarded to primary inlet duct 304 in heat exchanger 300 heats sanitary cold water introduced into the same exchanger 300 through sanitary inlet duct 308, and leaves exchanger 300 through primary delivery duct 306. Sanitary water heated in this manner on the contrary leaves exchanger 300 through sanitary delivery duct 310. Possibly, sanitary cold water can be mixed with some primary hot water by means of mixing valve 332 (Figs. 1, 2) before flowing into heat exchanger 300.

Advantageously, mouths 312, 314, 316, 318 and 328, ducts 304, 306, 308 and 310, and mixing valve 332 (if any), are arranged or extend substantially on three levels (denoted LIV1, LIV2 and LIV3 in Fig, 2). With reference to the example shown in Figs. 1 and 2, mouths 312, 314, 316 and 318 are located at a first level, ports 320 and 322 are located at a second level *(inter alia,* together with portions of ducts 304, 306 and 308), ports 324 and 326 are located at a third level *(inter alia,* together with mixing valve 332 and a portion of duct 310). Arrangement on three levels allows reducing the overall size of the circuits.

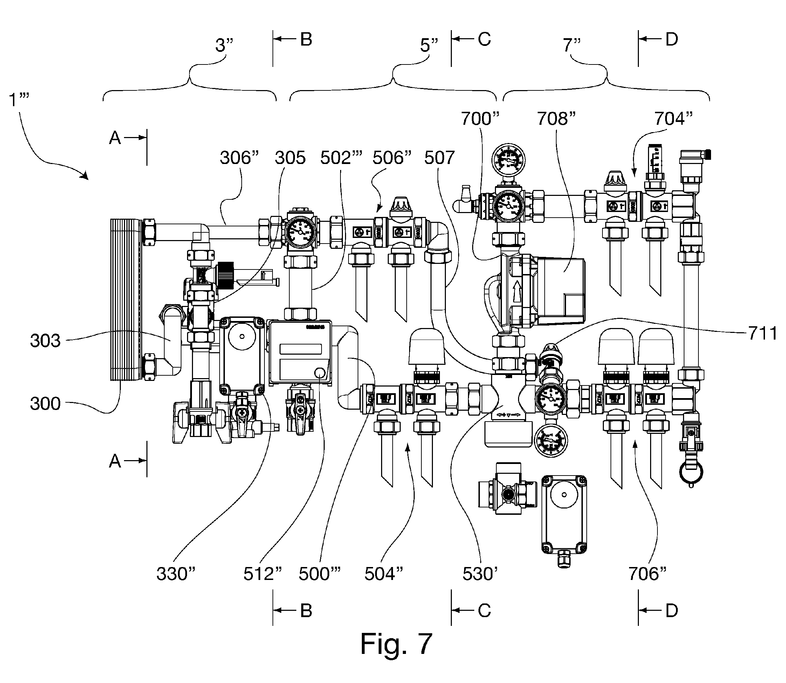

Fig. 7 shows a fourth embodiment of a fluid distribution unit 1"', comprising a sanitary generator 3", an intermediate distribution system 5'" and an end distribution system 7", described in more detail below.

Reference numeral 303 denotes the outlet connection for sanitary hot water from heat exchanger 300 to thermostatic mixer 305. Advantageously, duct 303 has two elbows in two mutually perpendicular planes (e.g., with reference to a system of three Cartesian axes in space XYZ, one elbow lies in plane XY and the other in plane YZ) and is made as a single casting: this allow reducing the overall size, in particular in longitudinal direction, of sanitary generator 3".

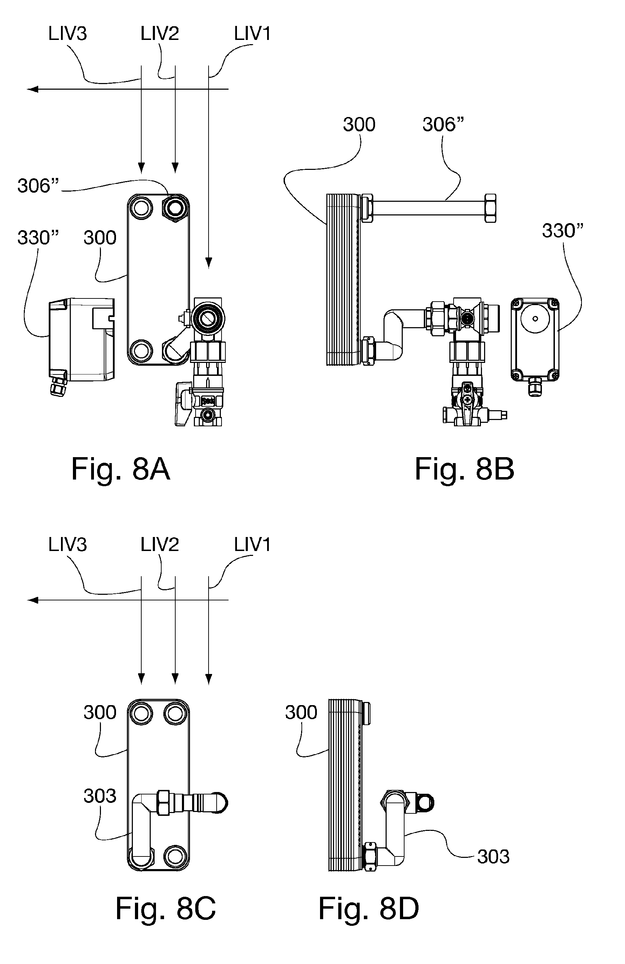

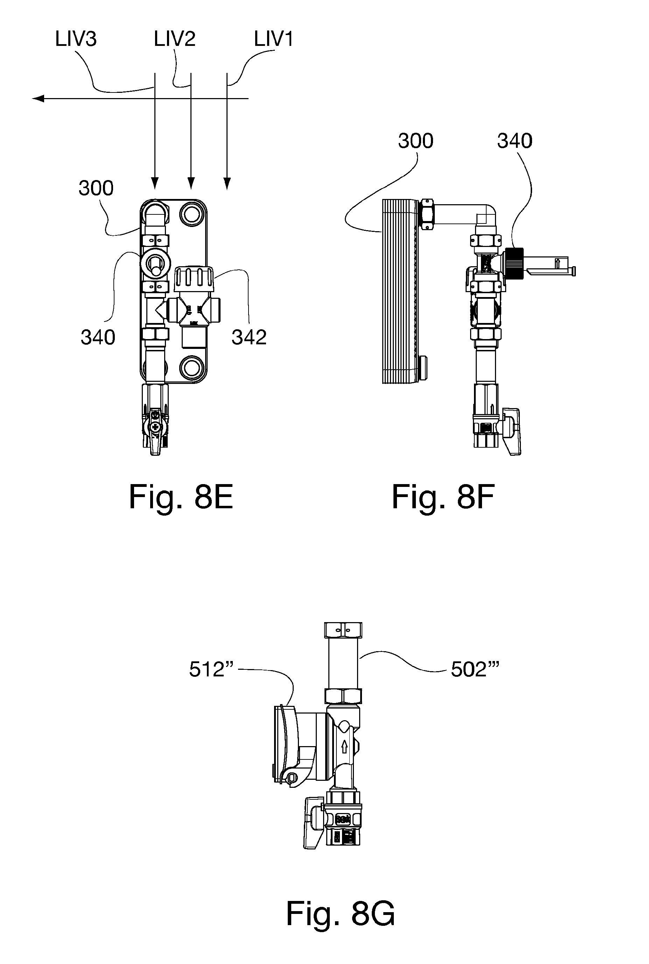

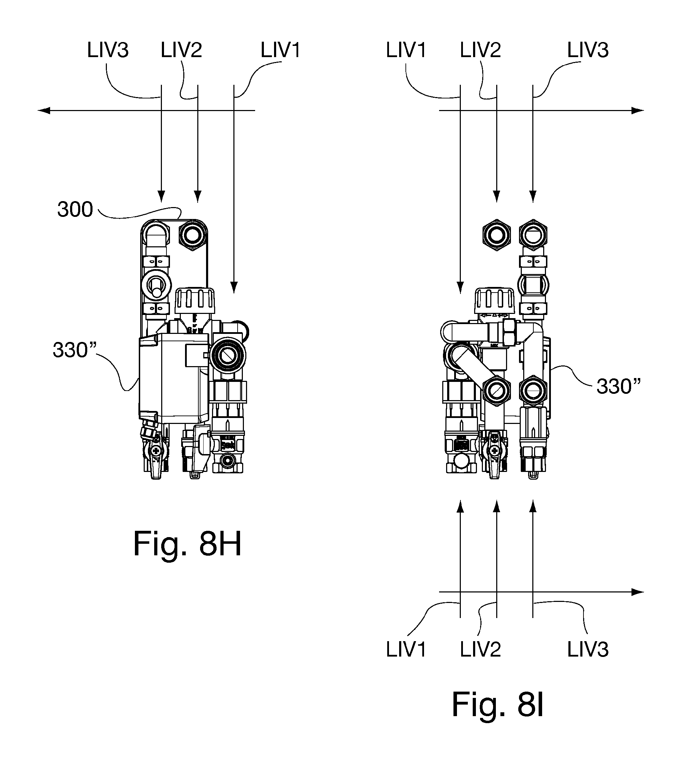

Figs. 8A to 8I are side and front views of sanitary generator 3" and show the three-dimensional structure and the arrangement on three levels LIV1, LIV2 and LIV3 of the generator. Figs. 8A to 8G show sanitary generator 3" in partially disassembled condition. Such Figures show that the arrangement according to three levels LIV1, LIV2 and LIV3 concerns in particular the connection mouths of heat exchanger 300, of the various ducts or other fittings, such as for instance ducts 303 and 306", and of other fluidic components, such as valves, calorie meter 512", flow switch 340 and thermostatic mixer 342 that allows mixing the temperature of the sanitary hot water (Figs. 8E, 8F).

### The intermediate distribution system

Intermediate distribution system 5 shown in Fig. 1 includes an inlet duct 500, a return duct 502, a delivery manifold 504, a return manifold 506 and a second selector valve 530, for instance a three-way valve with rotating shutter, possibly motor driven, similar to valve 330 described above, which can select supplying delivery manifold 504 with the conditioning fluid, for instance primary hot water, coming from inlet duct 500. Inlet duct 500 preferably is substantially rectilinear. Preferably, delivery manifold 504 is arranged substantially parallel to, or generally side by side with, inlet duct 500, and is preferably arranged so that hot water flows in opposite direction to water flowing in inlet duct 500.

Advantageously, manifolds 504 and 506 are built by assembling a plurality of modular elements that can be fitted together, such as for instance the element disclosed in patent application WO 2006/097892.

Preferably, return duct 502 is substantially arc- or J- or L shaped or, generally, it has a bend. Preferably, return manifold 506 is arranged substantially parallel to, or generally side by side with, return duct 502, and is preferably arranged so that hot water flows therein in opposite direction to water flowing in return duct 502. Preferably, inlet and return ducts 500 and 502, and/or delivery and return manifolds 504 and 506, are arranged substantially parallel to each other, or generally side by side. Return duct 502 preferably has a rectilinear section 503 (Fig. 1A). The above features allow building the intermediate distribution system with a simple and cheap modular construction: actually, it is particularly easy to change the lengths or the number of the modular components of manifolds 504, 506 according to the needs, possibly by changing the lengths of ducts 500, 502. Moreover, the intermediate distribution system has a very limited size.

One or more of inlet and return ducts 500 and 502, and return manifold 506, preferably lie at the aforesaid first level of the generator interface circuit 302, or at different levels. Delivery manifold 504 preferably lies at the aforesaid second level of the generator interface circuit 302, or at a different level from generator interface circuit 302.

Such features of the configuration of intermediate distribution system 5, and in particular the arrangement of the various elements on the different levels, allow making the system very compact, thereby reducing its overall size.

Advantageously, the first manifold supply duct 500 extends from sanitary generator 3 towards the end of intermediate distribution system 5 remote from sanitary generator 3, and the first delivery manifold 504 joins the first manifold supply duct 500 at the end of the latter located on the side of intermediate distribution system 5 remote from sanitary generator 3.

Advantageously, the first manifold return duct 502 extends from sanitary generator 3 towards the end of intermediate distribution system 5 remote from sanitary generator 3, and the first return manifold 506 joins the first manifold return duct 502 at the end of the latter located on the side of intermediate distribution system 5 remote from sanitary generator 3.

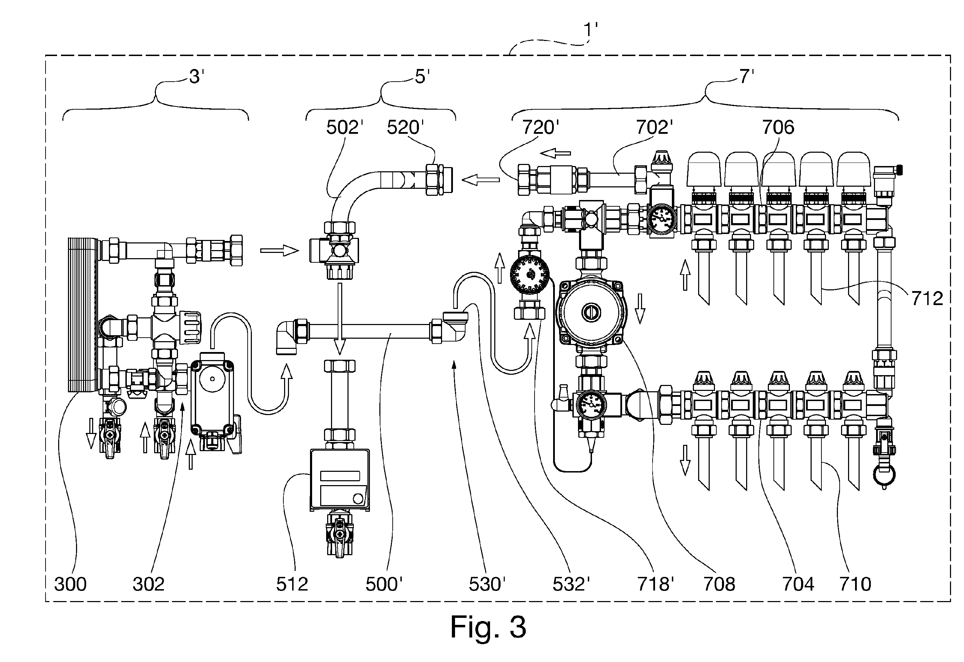

In this way, by using the same ducts 500 and 502, it is possible to build distribution units 1 that are either equipped (Fig. 1) or not equipped (Fig. 3) with manifolds 504, 506, thereby minimising the costs of ducts 500 and 502 themselves: indeed, each of said ducts 500 and 502 can be connected either to manifolds 504 and 506, respectively, or to end distribution system 7, 7', by means of a single fitting (520, 530, 530', respectively, where said fittings can include for instance threaded fittings, snap-coupled fittings, bayonet-coupled fittings or may include other kinds of quick couplings or generally of reversible mechanical couplings).

Advantageously, intermediate distribution system 5 can be sold as a mounting kit, comprising a set of previously assembled submodules. In such case, one of those previously assembled submodules includes (Fig. 1A):
- manifold return duct 502;
- fittings 501 and 520 located at the ends of duct 502;
- manifold collection duct 505, extending transversally to manifold return duct 502 and joining it in correspondence of end fitting 520.

At its end remote from fitting 520, manifold collection duct 505 preferably forms an elbow 507 and, past that elbow, it defines a fitting, preferably a threaded fitting or a quick-coupling fitting 509. Fitting 509 in turn is arranged to allow assembling a variable number, depending on the needs, of modular manifolds 504. The overall structure is preferably configured so that said modular manifolds 504 are parallel to manifold return duct 502, as described above, and that a fluid coming from such manifolds 504 flows along duct 503 in substantially opposite direction to its flow direction in manifolds 504. Fittings 501 and/or 520 preferably are T-shaped (three-way) fittings, cross-shaped fittings (with three, four or more ways) or star-shaped fittings (with more than four ways).

Advantageously, another one of those previously assembled submodules includes (Fig. 1B):
- manifold supply duct 500;
- the second selector valve 530 (described in more detail below), located at one end of duct 500;
- an end fitting 511, preferably an elbow fitting;
- a manifold inlet duct 515, connected to one port of selector valve 530.

Preferably, duct 515 forms an elbow 517. More preferably, elbow 517 is a double elbow allowing locating connection mouth 519, where duct 515 ends, at a different level from mouth 513 of fitting 511. Preferably, mouth 513 and/or mouth 519 are threaded, have a bayonet coupling or have another kind of quick coupling. Mouth 513 is so shaped that a manifold 504, and more preferably a modular manifold for instance of the kind disclosed in patent application WO 2006/097892, can be quickly connected thereto. Preferably, mouth 513 is so arranged that manifold 504, once assembled thereto, is substantially parallel to duct 500, and the fluid coming from fitting 511 flows through manifold 504 in a direction opposite to its flow direction along duct 500.

The modular construction of the intermediate distribution system, besides enabling a faster installation of the system, enables constructing intermediate distribution systems with different circuits merely by differently combining the proper previously assembled submodules, through simple mechanical mounting operations. Such circuits can subsequently be disassembled and modified with the same easiness. Moreover, the previously described arrangement of said submodules assists in making the overall system less cumbersome.

The operation of intermediate distribution system 5 is as follows. If the shutter of selector valve 330 is suitably positioned, primary hot water, or another suitable conditioning fluid coming from mouth 316, flows along inlet duct 500 and arrives at delivery manifold 504. From here, primary hot water, through a plurality of branch ducts 508, is sent to a plurality of air conditioning terminals, for instance radiators, not shown. Primary water returning from said air conditioning terminals, at lower temperature, arrives at return manifold 506 through a plurality of return ducts or branches 510, then flows along return duct 502 and calorie meter 512 (Fig. 1), if any, so that the energy consumption of each flat can be accounted for, and then it is the sent back to the boiler of the central system for production of primary hot water. In the system shown in Fig. 1, duct 306 joins return duct 502, so that primary water discharged from heat exchanger 300 is mixed with primary water coming from return duct 502 and is evacuated together with the latter.

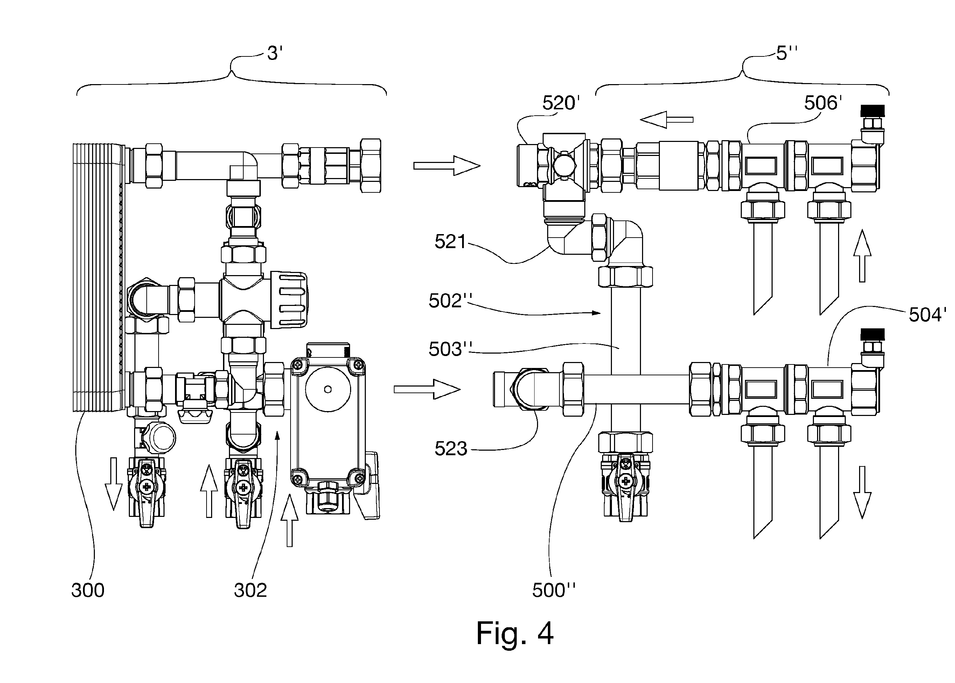

Fig. 4 shows an alternate embodiment of a fluid distribution unit 1", comprising a sanitary generator 3' (which can be the same as in Fig. 3) and an intermediate distribution system 5", whereas an end distribution system is missing (even though clearly it can be provided). In the present exemplary embodiment, intermediate distribution system 5" comprises:
- a delivery manifold 504';
- a manifold supply duct 500", which is substantially parallel to delivery manifold 504';
- a manifold return duct 502", which is substantially perpendicular, or generally transversal, to delivery manifold 504'.

Manifold supply duct 500" has a double elbow (or a section substantially bent in Z- or S-shape) 523, enabling the same duct 500" to pass above manifold return duct 502" (i.e. at a different one among the aforesaid levels LIV1, LIV2 and LIV3).

In the present exemplary embodiment, also manifold return duct 502" has a double elbow (or a section substantially bent in Z- or S-shape) 521, but it lies on a single one of the aforesaid levels LIV1, LIV2 and LIV3; yet, in other embodiments, not shown, double elbow 521 can be missing, and manifold return duct 502" can be substantially rectilinear.

Advantageously, intermediate distribution system 5" is sold as a mounting kit comprising a set of previously assembled submodules.

Advantageously, one of those previously assembled submodules includes inlet duct 500" and two fittings secured to the ends of duct 500" and arranged to be connected through a mechanical reversible connection, such as a threaded or a bayonet or a snap coupling or another kind of quick coupling. One of such fittings can define double elbow 523.

Advantageously, another one of those previously assembled submodules includes manifold return duct 502" and two fittings secured to the ends thereof and arranged to be connected through a mechanical reversible connection such as a threaded or a bayonet or a snap coupling or another quick coupling. One of such fittings can define double elbow 521. Moreover, one of such fittings 520' is advantageously cross-shaped or generally it has several ways (which possibly can be closed by integral partitions or caps, it they are not used). Also this modular construction of intermediate distribution system 5", comprising a plurality of previously assembled submodules, offers the advantages previously set forth in connection with system 5 shown in Fig. 1. Moreover, also in this case the previously described arrangement of said submodules assists in making the overall system less cumbersome.

Fig. 7 shows a fourth embodiment of a fluid distribution unit 1"', which has been already mentioned above. Intermediate distribution system 5'" of unit 1"' includes:
- a delivery manifold 504";
- a manifold supply duct 500"';
- a manifold return duct 502"', which is substantially perpendicular, or generally transversal, to delivery manifold 504".

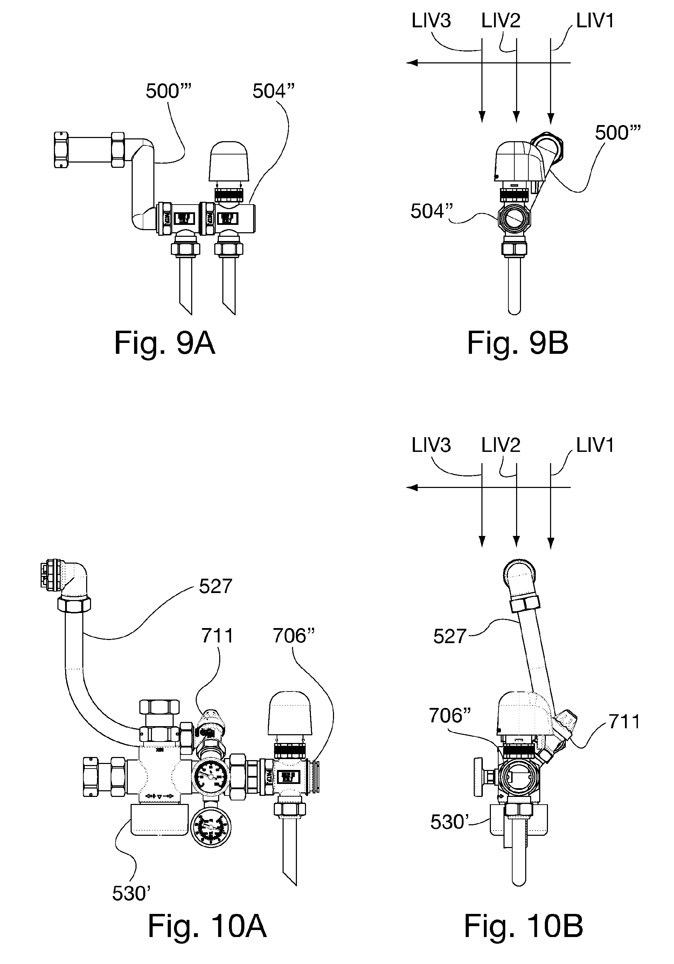

Manifold supply duct 500'" forms a double elbow (or has a section substantially bent in Z- or S-shape, Figs. 9A and 9B), and such elbow is advantageously formed as a single casting: this allows reducing the longitudinal size of intermediate distribution system 5"'.

Figs. 9A and 9B show the three-dimensional structure and the arrangement on three levels LIV1, LIV2 and LIV3 of intermediate distribution system 5'" and its parts, in particular its fluidic components, such as for instance modular manifolds 504" and 506", as well as of the connection mouths and the connections between the different elements thereof.

### The end distribution system

In the example shown in Fig. 1, intermediate distribution system 5 supplies end distribution system 7 with primary hot water or another conditioning fluid. Such system 7, in the example shown in Fig.1, comprises an inlet duct 700, a delivery manifold 704, also referred to as the second delivery manifold, and a return manifold 706, also referred to as the second return manifold. In the present exemplary embodiment, inlet duct 700 is fed through a delivery mouth 532 of the second selector valve 530, and in turn feeds a recirculation pump 708. Advantageously, delivery mouth 532, and fitting 718 of duct 700 connected thereto, form a reversible mechanical coupling, such as a threaded or snap joint, or a quick coupling.

Advantageously, also manifolds 704 and 706 are built by assembling a plurality of modular elements that can be fitted together, such as for instance the element disclosed in patent application WO 2006/097892.

A plurality of pipes 710 and 712, respectively, branch from manifolds 704 and 706 and form the supply and the return for primary hot water supplied to a plurality of conditioning terminals, such as for instance floor or wall radiating panels (not shown). Recirculation pump 708 can serve for instance to bring water arriving at manifold 704 to the required pressure, in case said radiating panels or other conditioning terminals give rise to an excessive pressure loss in the circuit. Thermostatic valve 716 directly recirculates a part or the whole of the primary hot water coming from intermediate distribution system 5 into return duct 702.

Return duct 702, bringing water or other fluid coming from return manifold 706 back to intermediate distribution system 5, joins return duct 502 through fitting 520 (Fig. 1) with three or more ways. Such a fitting 520, and the corresponding fitting 720 in duct 702 joining it, form a reversible mechanical coupling, such as for instance a threaded or a snap or a quick coupling.

Preferably, delivery manifold 704 and return manifold 706 lie at different levels. Preferably, return manifold lie at the aforesaid first level.

Fig. 7 shows a fourth embodiment of a fluid distribution unit 1"', which has been already mentioned above. End distribution system 7'" of unit 1'" receives supply water from manifolds 504" of intermediate distribution system 5"'. Through duct 700", water arrives at delivery manifolds 704" and is sent by such manifolds to a plurality of air conditioning terminals, for instance floor or wall radiating panels (not shown). Return water from air conditioning terminals flows into return manifolds 706" and, through return duct 527 towards the boiler, into return manifolds 506" of intermediate distribution system 5'" (Figs. 10A and 10B).

Reference numeral 530' denotes a second selector valve, such as a three-way valve with rotary shutter, possibly motor driven, similar to valve 530 described above and serving to adjust temperature. Valve 530' is equipped with return connections towards the boiler and with suitable sensors to detect water temperature and pressure.

Reference numeral 708" denotes a recirculation pump, and reference numeral 711 denotes a valve adjusting the return flow towards the boiler.

Figs. 10A and 10B show the three-dimensional structure and the arrangement on three levels LIV1, LIV2 and LIV3 of end distribution system 7" and its parts, in particular its fluidic components, such as for instance modular manifolds 704" and 706", as well as of the connection mouths and the connections between the different elements.

The previously described features of the configuration of end distribution system 7", and in particular the arrangement of the various elements on the different levels, allow making the system very compact, thereby reducing its overall size.

In general, the present invention allows building fluid distribution units for heating and/or cooling buildings that can be housed within boxes of about 1 m x 0.5 m, i.e. with very limited size taking into account the amount of components housed therein.

In other embodiments, not shown, the fluid distribution unit can lack the end distribution system and include only the sanitary generator and the intermediate distribution system.

On the contrary, in the embodiment shown in Fig. 3, fluid distribution unit 1' comprises a sanitary generator 3', an intermediate distribution system 5' and an end distribution system 7', and intermediate distribution system 5' lacks delivery and return manifolds, whereas it includes inlet and return ducts 500 and 502 and the second selector valve 530.

The ducts in sanitary generators, intermediate distribution systems and end distribution systems according to the invention can be made by substantially rigid metal pipes.

A novel aspect of the fluid distribution units described above is that, contrary to prior art systems, they can implement, in a limited space, possibly within the internal volume of a housing box of limited size, both the fluid distribution functions (distribution of primary hot water to the sanitary hot water generator, the radiators and the wall and/or floor radiating panels) and the functions of automatic system management and accounting for the consumptions, since, depending on the cases, the fluid distribution units described above can include thermostats, flow switches, timers, calorie meters, actuators and logic units for the control and the automatic management, On the contrary, in the systems presently known, the distribution and management functions are implemented by two or more different circuits located in different points in the building: for instance, in a condominium, all calorie meters for a plurality of flats are presently located in a basement, close to the central boiler of the condominium, whereas the different assemblies for primary water distribution are located each near or inside the corresponding flat. Arranging the distribution and accounting functions within a single volume makes a responsible and conscious usage by the end user and automation of the system itself easier.

### The housing box

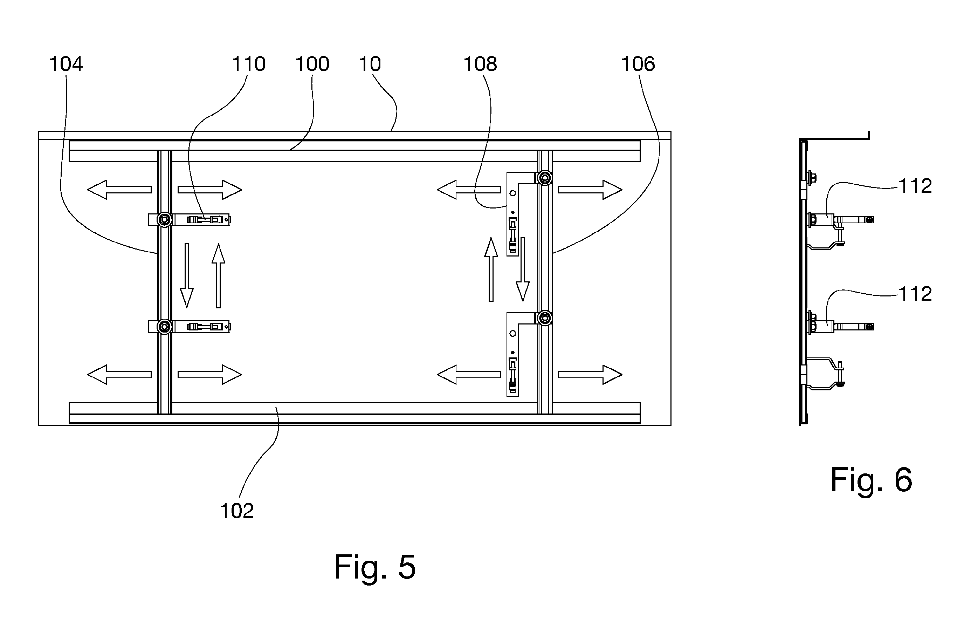

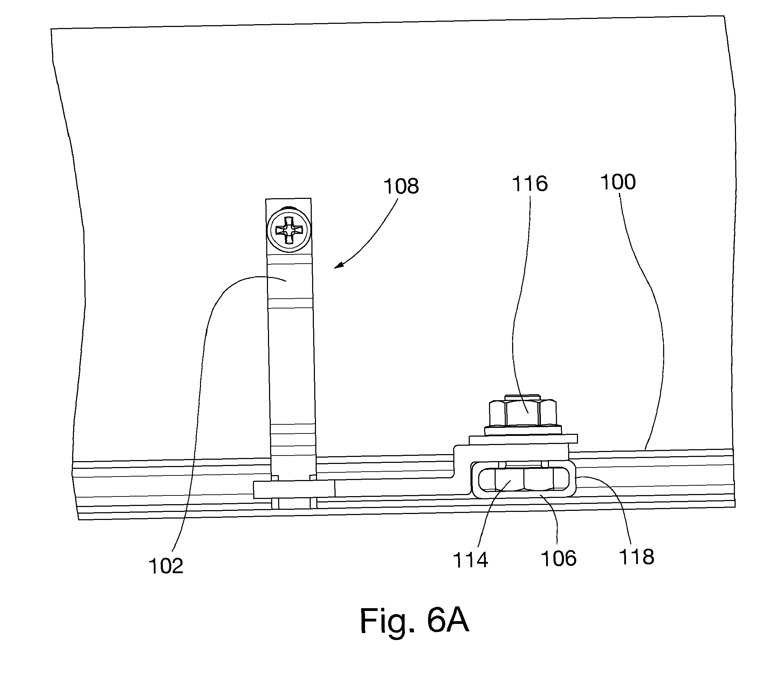

Figs. 5, 6 and 6A show an exemplary embodiment of a box arranged to house and fasten the components of a fluid distribution unit according to the present invention.

The box, generally denoted by reference numeral 10, can include an external casing or shell made of steel, a different metal or plastics and having for instance a parallelepiped shape. Two longitudinal guides 100, 102, having fastened thereto one or more transversal guides 104, 106, are located on the bottom or near two side walls of the box. Longitudinal guides 100, 102 and transversal guides 104, 106 are so arranged that they allow a quick and reversible fastening of transversal guides 104, 106 in a plurality of positions along longitudinal guides 100, 102. For instance, the longitudinal and transversal guides can be fastened together by means of a plurality of screwing or hooking holes or slots arranged along guides 100, 102, or by means of other hooking or snap fastening systems.

Each transversal guide 104, 106 has fastened thereto longitudinal and transversal fastening brackets 108 and 110, respectively, to which the ducts of a fluid distribution unit of the kind previously described can be fastened, for instance by means of U-bolts 112.

In the embodiment shown in Fig. 6A, transversal guides 104, 106 comprise C-shaped section bars 118, inside which the head of screw 114 is inserted. By tightening nut 116, brackets 108, 110 can be locked in the desired position along section bars 118.

Preferably, longitudinal guides 100, 102 and/or transversal guides 104, 106 are such that they allow adjusting the fastening positions of longitudinal and transversal fastening brackets 108 and 110 along most of the length of longitudinal and/or transversal guides 100, 102 and 104, 106, respectively. More preferably, longitudinal and/or transversal guides 100, 102 and 104, 106, respectively, are such that they allow adjusting the fastening positions of longitudinal and transversal fastening brackets 108 and 110, respectively, along 80 - 90% of the length of longitudinal and/or transversal guides 100, 102 and 104, 106, respectively.

Thanks to the above features, an operator can position at will, both vertically and laterally, longitudinal and transversal fastening brackets 108 and 110, so that fluid distribution units with very different duct shapes and paths can be mounted inside box 10, and various components, such as for instance valves, manifolds, thermostats, flow switches, calorie meters, can be added or removed with considerable freedom.

When the system is installed, the box can be for instance built into a wall and cemented therein.

The above description shows that, by the present invention, modular fluid distribution units can be built by differently assembling a small number of base modules, possibly previously assembled, such as for instance sanitary generator 3, intermediate distribution systems 5 and 5' and end distribution systems 7 and 7', described above. Such modular units, thanks to the various features previously described, including in particular the provision of reversible mechanical couplings, can be readily modified, enlarged or reduced even after the first installation.

The exemplary embodiments described above can undergo several changes and modifications without departing from the scope of the invention. For instance, sanitary generator 3 may also include an electric heater, an accumulator boiler, a burner, a mixing valve mixing primary hot water, or another conditioning fluid, with cold sanitary water, or another expendable fluid, or yet a simple valve directly supplying primary hot water, or another conditioning fluid to be used as sanitary hot water.

The examples and the lists of possible variants of the present application are to be intended as non-exhaustive lists.

## Claims

1. A fluid distribution unit (1, 1'), including an intermediate distribution system (5, 5'), in turn including:
a.1) a first delivery manifold (504);
a.2) a first return manifold (506);
a.3) a first manifold supply duct (500), arranged to convey a conditioning fluid to the first delivery manifold (504);
a.4) a first manifold return duct (502), arranged to evacuate the conditioning fluid coming from the first return manifold (506);
wherein the fluidic circuits of the intermediate distribution system (5, 5') are arranged for being reversibly connected to circuits external to the same unit (1, 1') through mechanical couplings.

2. The unit (1, 1') as claimed in claim 1, further including a sanitary generator (3, 3'), in turn including:
b.1) a sanitary heater (300) arranged to heat an expendable fluid;
b.2) a generator interface circuit (302), arranged to convey the conditioning fluid and/or the expendable fluid to the sanitary heater (300), and to evacuate the conditioning fluid and/or the expendable fluid from the sanitary heater (300),
wherein the fluidic circuits of the sanitary generator (3, 3') and of the intermediate distribution system (5, 5') are arranged to be mutually and reversibly connected through mechanical couplings.

3. The unit (1, 1') as claimed in claim 1 o 2, wherein the mechanical couplings enabling reversible connection of the sanitary generator (3, 3') and the intermediate distribution system (5, 5') comprise an element chosen out of the following group: threaded mechanical fittings, quick coupling fittings, snap or dap or bayonet couplings.

4. The unit (1, 1') as claimed in claim 2 or 3, wherein the set of the circuits of the sanitary generator (3, 3') and the intermediate distribution system (5, 5') has a substantially smaller depth than the width and the length of the same set of circuits, and the first delivery manifold (504), the first return manifold (506), the first manifold supply duct (500) and the first manifold return duct (502) are arranged on three levels, with reference to the depth of the set of the circuits of the sanitary generator (3, 3') and the intermediate distribution system (5, 5').

5. The unit (1, 1') as claimed in one or more of claims 2 to 4, wherein the first delivery manifold (504) and the first return manifold (506) lie at different levels (LIV1, LIV2, LIV3) with reference to the depth of the set of the circuits of the sanitary generator (3, 3') and the intermediate distribution system (5, 5').

6. The unit (1, 1') as claimed in one or more of claims 2 to 5, wherein the sanitary generator (3, 3') includes a plurality of ports (320, 322, 324, 326) through which the generator interface circuit (302) interfaces with the sanitary heater (300) to supply the latter with the expendable fluid and to evacuate the expendable fluid therefrom, and wherein the ports (320, 322, 324, 326) and part of the ducts of the generator interface circuit (302), respectively, are arranged and lie substantially on three levels (LIV1, LIV2, LIV3), with reference to the depth of the set of the circuits of the sanitary generator (3, 3') and the intermediate distribution system (5, 5').

7. The unit (1, 1') as claimed in one or more of claims 2 to 4, wherein the sanitary generator (3, 3') includes an element chosen out of the following group: a heat exchanger, an electric heater, an accumulator boiler, a burner, a mixing valve.

8. The unit (1, 1') as claimed in one or more of the preceding claims, wherein the first manifold supply duct (500) extends along a substantially rectilinear or generally straight path.

9. The unit (1, 1') as claimed in one or more of claims 2 to 8, wherein the sanitary heater includes:
a) a heat exchanger (300);
b) a first valve (330) with three or more than three ways, arranged to switch the supply of the conditioning fluid to the heat exchanger (300) and/or the intermediate distribution system (5, 5').

10. The unit (1, 1') as claimed in one or more of the preceding claims, further including an end distribution system (7, 7') including a second delivery manifold (704) and a second return manifold (706).

11. The unit (1, 1') as claimed in one or more of the preceding claims, comprising a second valve (530) with three or more than three ways, arranged to be fed with fluid coming from the first valve (330) with three or more than three ways and to switch the fluid flow from the intermediate distribution system (5, 5') to the end distribution system (7, 7').

12. The unit (1, 1') as claimed in one or more of the preceding claims, comprising a second valve (530) with three or more than three ways, arranged to be fed with fluid by the first valve (330) with three or more than three ways and to switch the fluid flow from the intermediate distribution system (5, 5') to the second delivery manifold (704).

13. The unit (1, 1') as claimed in one or more of the preceding claims, comprising a plurality of fittings (532, 718; 520, 720) arranged to reversibly connect the intermediate distribution system (5, 5') and the end distribution system (7, 7') through mechanical couplings in order to supply the latter system with the conditioning fluid and/or the expendable fluid and to evacuate the conditioning fluid and/or the expendable fluid therefrom, wherein the plurality of fittings (532, 718; 520, 720), the first (504) and the second (704) delivery manifolds, the first (506) and the second (706) return manifolds, respectively, are arranged and lie on three different levels, with reference to the depth of the set of the circuits of the sanitary generator (3, 3') and the intermediate distribution system (5, 5').

14. The unit (1, 1') as claimed in one or more of claims 2 to 13, wherein the sanitary generator (3, 3') is substantially arranged side by side with the intermediate distribution system (5, 5') and/or the end distribution system (7, 7').

15. The unit (1, 1') as claimed in one or more of the preceding claims, wherein the intermediate distribution system (5, 5') is substantially arranged side by side with the end distribution system (7, 7').

16. The unit (1, 1') as claimed in one or more of claims 2 to 15, wherein the sanitary generator (3, 3') the intermediate distribution system (5, 5') and the end distribution system (7, 7') are substantially arranged in line relative to each other.

17. The unit (1, 1') as claimed in one or more of the preceding claims, including a box in turn including:
- an external housing case (10), arranged to contain at least two out of the sanitary generator (3, 3'), the intermediate distribution system (5, 5') and the end distribution system (7, 7');
- a plurality of fastening brackets (112), arranged to fasten the sanitary generator (3, 3'), if any, the intermediate distribution system (5, 5'), if any, and the end distribution system (7, 7'), if any, to the external housing case (10), wherein the positions of the fastening brackets (112) is adjustable along most of the length of the external housing case (10).

18. The unit (1, 1') as claimed in claim 16, wherein the box internally houses two or more of the sanitary generator (3, 3'), the intermediate distribution system (5, 5') and the end distribution system (7, 7')

19. A supply kit for a fluid distribution unit (1, 1'), comprising a plurality of submodules arranged to be assembled together through mechanical reversible couplings so as to form an intermediate distribution system (5, 5') in turn including:
b.1) a first delivery manifold (504);
b.2) a first return manifold (506);
b.3) a first manifold supply duct (500), arranged to convey the conditioning fluid to the first delivery manifold (504);
b.4) a first manifold return duct (502), arranged to evacuate the conditioning fluid coming from the first return manifold (506).

20. The supply kit as claimed in claim 19, wherein one of the submodules includes:
- the first manifold supply duct (500);
- a valve (530) with three or more than three ways, possibly driven by a respective actuator and secured at one end of the first manifold supply duct (500);
- fittings for connecting the submodule to the rest of the fluid distribution unit (1, 1') through mechanical reversible connections.

21. The supply kit as claimed in claim 19 or 20, wherein one of the submodules includes:
- the first manifold return duct (502);
- end fittings (501, 520) located at the ends of the first manifold return duct (502) and arranged to connect the submodule to the rest of the fluid distribution unit (1, 1') through mechanical reversible couplings.

22. The supply kit as claimed in any of claims 19 to 21, wherein one of the submodules includes:
- the first manifold supply duct (500") and/or the first manifold return duct (502");
- a section bent to a double elbow (521, 523) and/or to a Z- and/or S-shape;
- fittings for connecting the one of the submodules to the rest of the fluid distribution unit (1, 1') through mechanical reversible couplings.

23. A method of distributing fluids, comprising the steps of:
- providing a fluid distribution unit (1, 1') as claimed in one or more of the preceding claims;
- feeding the fluid distribution unit (1, 1') with a conditioning fluid.
